# EUROPEAN PATENT APPLICATION

(11) **EP 4 082 981 A1**
(43) Date of publication of application: **02.11.2022**
(21) Application number: 20907103.4
(22) Date of filing: 03.12.2020
(51) Int. Cl.: C04B 24/26, C04B 28/02, C08F 220/26

(54) **POWDER DISPERSANT FOR HYDRAULIC COMPOSITION AND METHOD FOR PRODUCING SAME**

(30) Priority: 25.12.2019 JP 2019234432
(71) Applicant: Kao Corporation, Chuo-ku Tokyo 103-8210 (JP)
(72) Inventor: SASHIHARA Yoshiaki, Wakayama-shi, Wakayama 640-8580 (JP); SHIMADA Kohei, Wakayama-shi, Wakayama 640-8580 (JP)
(74) Representative: Hoffmann Eitle
(86) International application number: PCT/JP2020/044973
(87) International publication number: WO 2021/131567

(57) **Abstract**

The present invention is a powdered dispersant for hydraulic compositions containing a copolymer obtained by polymerizing raw material monomers containing a predetermined monomer 1 containing AO group with a number of added moles n falling within a predetermined range and a predetermined monomer 2 having a predetermined group such as a carboxylic acid group or the like, wherein a ratio of monomer 2 in the raw material monomers is 22 mass% or more, and a product of a value of n of monomer 1 and a value of mass% of the ratio is 420 or more and 2600 or less.

## Description

### Field of the Invention

The present invention relates to a powdered dispersant for hydraulic compositions and a production method thereof.

### Background of the Invention

In recent years, Japan has witnessed deterioration of its major infrastructure constructed during the period of rapid economic growth becoming apparent, and thus is about to enter the age of great updates and repairs of infrastructure. Especially, the field of repair and reinforcement is expected to grow in demand, and in this field, repairing materials having a hydraulic composition and a powder dispersant premixed therein are mainly used. Examples of powder dispersants premixed in repairing materials include polycarboxylic acid-based dispersants. In general, polycarboxylic acid-based dispersants are produced from a monomer containing a group for adsorbing to a hydraulic powder (carboxylic acid group or the like) and a monomer containing a graft chain of an alkyleneoxy group (hereinafter also referred to as AO) such as, for example, an ethyleneoxy group (hereinafter also referred to as EO). Among polycarboxylic acid-based dispersants having the same copolymerization ratio of the above monomers, those having a larger average number of added moles of EO of an EO graft chain which is a steric repulsion group are superior in thin film formability or ease of grinding while cooling and relatively easier to powderize. For example, in JP-A 2000-26145, which discloses producing a powdered cement dispersant by dry-powderizing a mixture containing a (meth)acrylate-based cement dispersant having a specific constituent unit including an alkyleneoxy group and water, an average number of added moles n of AO is 20 or more, and there is a description that the mixture is difficult to dry-powderize and becomes in gum form when n is less than 20. JP-A 2002-167255 discloses a powdery dispersant comprising a copolymer obtained by polymerizing a specific vinyl monomer (a) such as an ethylenically unsaturated carboxylic acid derivative having a polyoxyalkylene group or the like with a specific vinyl monomer (b) such as (meth)acrylic acid or the like, wherein an average value of numbers of added moles of oxyalkylene groups or oxystyrene groups with 2 to 4 carbons is 50 to 300, the ratio of the monomer (a) and the monomer (b) being (a)/[(a) + (b)] × 100 = 10 to 50 (mol%), and at least part of the copolymer is a monovalent metal salt.

### Summary of the Invention

Among polycarboxylic acid-based dispersants, a polycarboxylic acid-based powder dispersant with a small average number of added moles of EO of an EO graft chain is considered to be useful for reducing the viscosity of slurry, thereby improving the workability, and making it possible to retain the fluidity for a long time, or the like as compared with a polycarboxylic acid-based powder dispersant with a large average number of added moles of EO of an EO graft chain, but it was difficult to powderize. While there is a tendency that powderization of a polycarboxylic acid-based dispersant with a small average number of added moles of EO of an EO graft chain can be facilitated by the introduction of a hydrophobic monomer into the constituent monomers or the like, there are concerns that it leads to not only reduced adsorptivity to cement but also reduced dispersibility, resulting in insufficient performance.

The present invention provides a powdered dispersant for hydraulic compositions containing a polycarboxylic acid-based copolymer with a small average number of added moles of AO of an AO graft chain, and a production method thereof.

The present invention relates to a powdered dispersant for hydraulic compositions containing a copolymer obtained by polymerizing raw material monomers containing monomer 1 represented by the general formula (1) and at least one monomer 2 selected from a monomer represented by the general formula (2a), a monomer represented by the general formula (2b), a monomer represented by the general formula (2c) and a monomer represented by the general formula (2d), wherein
a ratio of monomer 2 in the raw material monomers is 22 mass% or more, and
a product of a value of n of monomer 1 and a value of mass% of the ratio is 420 or more and 2600 or less, 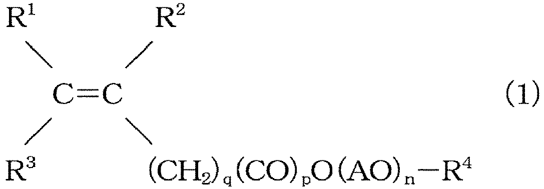
wherein R¹ and R³ are the same or different and individually represent a hydrogen atom or a methyl group; R² represents an alkyl group with 1 or more and 3 or less carbons; R⁴ represents a hydrogen atom or a methyl group; q is a number of 0 or more and 2 or less; p is 0 or 1; and n is a number of 5 or more and 30 or less, 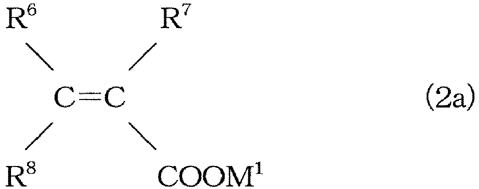 ]
wherein R⁶, R⁷ and R⁸ are the same or different and individually represent a hydrogen atom or a methyl group; and M¹ represents a hydrogen atom, an alkali metal or an alkaline-earth metal (1/2 atom), 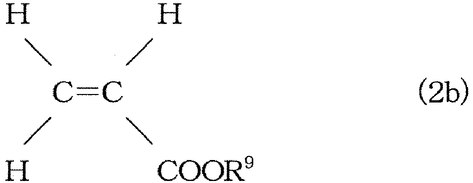
wherein R⁹ represents a hydrocarbon group with 1 or more and 4 or less carbons, optionally containing a hetero atom, 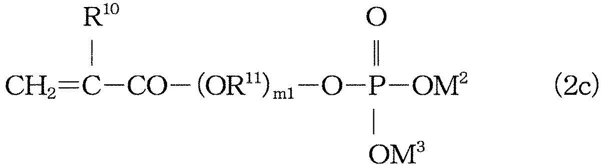
wherein R¹⁰ represents a hydrogen atom or a methyl group; R¹¹ represents an alkylene group with 2 or more and 12 or less carbons; m1 is a number of 1 or more and 30 or less; and M² and M³ are the same or different and individually represent a hydrogen atom, an alkali metal or an alkaline-earth metal (1/2 atom), and 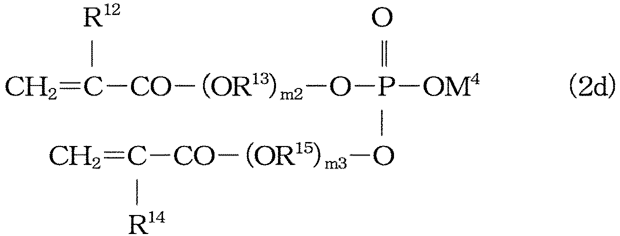
wherein R¹² and R¹⁴ are the same or different and individually represent a hydrogen atom or a methyl group; R¹³ and R¹⁵ are the same or different and individually represent an alkylene group with 2 or more and 12 or less carbons; m2 and m3 are the same or different and individually represent a number of 1 or more and 30 or less; and M⁴ represents a hydrogen atom, an alkali metal or an alkaline-earth metal (1/2 atom).

In addition, the present invention relates to a method for producing a powdered dispersant for hydraulic compositions including, obtaining a copolymer by polymerizing raw material monomers containing monomer 1 represented by the general formula (1) and at least one monomer 2 selected from a monomer represented by the general formula (2a), a monomer represented by the general formula (2b), a monomer represented by the general formula (2c) and a monomer represented by the general formula (2d), wherein
monomer 2 is used such that a ratio of monomer 2 in the raw material monomers is 22 mass% or more,
monomer 1 and monomer 2 are used such that a product of a value of n of monomer 1 and a value of mass% of the ratio is 420 or more and 2600 or less, and
the polymerization of the raw material monomers is carried out in a reaction medium containing water to obtain a reaction product containing water and the copolymer, and the reaction product is dried to obtain a powder containing the copolymer.

According to the present invention, a powdered dispersant for hydraulic compositions containing a polycarboxylic acid-based copolymer with a small average number of added moles of AO of an AO graft chain and a production method thereof are provided. The copolymer of the present invention is easy to powderize despite a small average number of added moles of AO of an AO graft chain, so that a powdered dispersant can be easily obtained.

### Embodiments of the Invention

### [Powdered dispersant for hydraulic compositions]

The powdered dispersant for hydraulic compositions of the present invention contains a copolymer obtained by polymerizing raw material monomers containing monomer 1 and monomer 2 under predetermined conditions.

A reason that the copolymer of the present invention is easily powderized is not exactly clear, but it is inferred as follows.

Monomer 1 has AO group such as EO group or the like as a steric repulsion group. EO group has the property of easily incorporating water, so that a higher EO ratio in the copolymer tends to be disadvantageous for powderization. On the other hand, monomer 2 is more hydrophobic than monomer 1, so that when it is incorporated into the copolymer, a higher ratio of monomer 2 in the copolymer is advantageous for powderization. In other words, the ratio of monomer 2 in the raw material monomers is considered to have a significant effect on powderization.

The copolymer tends to be more easily powderized after incorporating monomer 1 having a larger average number of added moles of AO group than one having a smaller average number of added moles of AO group. It is inferred that this is because a copolymer with a larger average number of added moles of AO group is highly crystallized through a drying process, for example, a heating and drying process as a hydrogen bond between AO group and water is more easily cleaved during such a process.

Taking these two factors into consideration, the present invention has focused on the product of the ratio of monomer 2 (mass%) and the average number of added moles n of AO of monomer 1, and has found that the copolymer tends to be easily powderized when a numerical value of the product is a certain value or higher.

Monomer 1 is a monomer represented by the above general formula (1).

In the general formula (1), R¹ and R³ are the same or different, and preferably individually represent a hydrogen atom.

In the general formula (1), R² preferably represents a methyl group.

In the general formula (1), R⁴ preferably represents a methyl group.

In the general formula (1), q is preferably 0.

In the general formula (1), p is preferably 1.

In the general formula (1), n is preferably 8 or more and more preferably 9 or more, and preferably 25 or less and more preferably 23 or less. n may be an average number of added moles.

Monomer 2 is at least one monomer selected from a monomer represented by the general formula (2a) (hereinafter, also referred to as monomer 2a), a monomer represented by the general formula (2b) (hereinafter, also referred to as monomer 2b), a monomer represented by the general formula (2c) (hereinafter, also referred to as monomer 2c) and a monomer represented by the general formula (2d) (hereinafter, also referred to as monomer 2d) .

In the general formula (2a), R⁶, R⁷ and R⁸ are the same or different, and individually represent a hydrogen atom or a methyl group.

In the general formula (2a), M¹ preferably represents a hydrogen atom or an alkali metal. The alkali metal is preferably sodium.

In the general formula (2b), R⁹ preferably represents a hydrocarbon group with 1 or 2 carbons. The hydrocarbon group is preferably an alkyl group.

In the general formula (2c), R¹⁰ preferably represents a methyl group.

In the general formula (2c), R¹¹ preferably represents an ethyleneoxy group.

In the general formula (2c), M² and M³ are the same or different, and preferably individually represent a hydrogen atom or an alkali metal. The alkali metal is preferably sodium.

In the general formula (2c), m1 is preferably 1 or more and more preferably 2 or more, and preferably 4 or less and more preferably 3 or less. m1 may be an average number of added moles.

In the general formula (2d), R¹² and R¹⁴ are the same or different, and preferably individually represent a methyl group.

In the general formula (2d), R¹³ and R¹⁵ are the same or different, and preferably individually represent an ethyleneoxy group.

In the general formula (2d), m2 and m3 are the same or different, and individually represent preferably 1 or more and more preferably 2 or more, and preferably 4 or less and more preferably 3 or less. m2 and m3 may be average numbers of added moles.

In the general formula (2d), M⁴ preferably represents a hydrogen atom or an alkali metal. Examples of the alkali metal include sodium.

Monomer 2 preferably includes monomer 2a.

Monomer 2 may include monomer 2a and at least one monomer selected from monomer 2b and monomer 2c.

When monomer 2 includes monomer 2a, a ratio of monomer 2a in monomer 2 is preferably 60 mass% or more and more preferably 80 mass% or more, and preferably 100 mass% or less, and may be 100 mass%.

The copolymer of the present invention is a copolymer obtained by polymerizing raw material monomers containing monomer 1 and monomer 2, wherein a ratio of monomer 2 in the raw material monomers is 22 mass% or more, and a product of a value of n of monomer 1 and a value of mass% of the ratio is 420 or more and 2600 or less.

In the copolymer of the present invention, the ratio of monomer 2 in the raw material monomers is preferably 25 mass% or more and more preferably 30 mass% or more, and preferably 80 mass% or less and more preferably 70 mass% or less from the viewpoint of adsorptivity to hydraulic compositions.

In the copolymer of the present invention, the product of a value of n of monomer 1 and a value of mass% of the ratio of monomer 2 in the raw material monomers is 420 or more, preferably 460 or more and more preferably 500 or more, and 2600 or less, preferably 1500 or less, more preferably 1000 or less and further preferably 720 or less from the viewpoint of ease of dry powderization and the viewpoint of fluidity retention.

The copolymer of the present invention may contain a monomer other than monomers 1 and 2 (hereinafter, also referred to as monomer 3) as a raw material monomer in a range that it does not impair the effects of the present invention. Examples of monomer 3 can include allylsulfonate, methallylsulfonate and salts thereof, such as, for example, alkali metal salts, alkaline-earth metal salts, ammonium salts or amine salts thereof. Further, examples of monomer 3 include (meth)acrylamide, N-methyl (meth)acrylamide, N,N-dimethyl (meth)acrylamide, 2-(meth)acrylamide-2-methasulfonate, 2-(meth)acrylamide-2-ethanesulfonate, 2-(meth)acrylamide-2-propanesulfonate, styrene and styrene sulfonate. (Meth)acryl means acryl or methacryl.

In the copolymer of the present invention, a ratio of the total of monomers 1 and 2 in the raw material monomers is preferably 95 mass% or more, more preferably 97 mass% or more, further preferably 98 mass% or more and furthermore preferably 99 mass% or more, and preferably 100 mass% or less, and may be 100 mass% from the viewpoints of ease of powderization and excellent dispersibility.

In the copolymer of the present invention, a ratio of the total of monomers 1 and 2 in the raw material monomers is preferably 95 mol% or more, more preferably 97 mol% or more, further preferably 98 mol% or more and furthermore preferably 99 mol% or more, and preferably 100 mol% or less, and may be 100 mol% from the viewpoints of ease of powderization and excellent dispersibility.

The copolymer of the present invention has a weight average molecular weight (Mw) of preferably 20,000 or more and more preferably 30,000 or more, and preferably 100,000 or less and more preferably 70,000 or less. The weight average molecular weight is measured by a gel permeation chromatography (GPC) method under the following conditions.

### *GPC conditions

Device: GPC (HLC-8320GPC) manufactured by Tosoh Corporation
Columns: G4000PWXL + G2500PWXL (manufactured by Tosoh Corporation)
Eluent: 0.2 M phosphate buffer/CH₃CN = 9/1
Flow rate: 1.0 mL/min
Column temperature: 40°C
Detection: RI
Sample size: 0.2 mg/mL
Standard substance: expressed in terms of polyethylene glycol (monodisperse polyethylene glycol with a known molecular weight, molecular weight 87,500, 250,000, 145,000, 46,000, 24,000)

In the copolymer of the present invention, it is preferred from the viewpoint of ease of powderization that monomer 2 be methacrylic acid, the ratio of monomer 2a in monomer 2 be 100 mol%, n in monomer 1 be 9 or more and 23 or less, the product of a value of n of monomer 1 and a mass percentage of the ratio of monomer 2 in the raw material monomers be 500 or more and 720 or less, and the weight average molecular weight be 30000 or more and 70000 or less.

In the copolymer of the present invention, it is preferred from the viewpoint of ease of powderization that monomer 2 be methacrylic acid, the ratio of monomer 2a in monomer 2 be 100 mol%, n in monomer 1 be 5 or more and 15 or less, the product of a value of n of monomer 1 and a mass percentage of the ratio of monomer 2 in the raw material monomers be 400 or more and 700 or less, and the weight average molecular weight be 30000 or more and 90000 or less.

In the copolymer of the present invention, it is preferred from the viewpoint of ease of powderization that monomer 2 be methacrylic acid, the ratio of monomer 2a in monomer 2 be 100 mol%, n in monomer 1 be 16 or more and 30 or less, the product of a value of n of monomer 1 and a mass percentage of the ratio of monomer 2 in the raw material monomers be 600 or more and 1500 or less, and the weight average molecular weight be 30000 or more and 45000 or less.

The powdered dispersant for hydraulic compositions of the present invention contains the copolymer of the present invention in an amount of preferably 3 mass% or more and more preferably 5 mass% or more, and preferably 100 mass% or less. The powdered dispersant for hydraulic compositions of the present invention may be composed of the copolymer of the present invention.

The powdered dispersant for hydraulic compositions of the present invention has an average particle size of preferably 5 µm or more and more preferably 10 µm or more, and preferably 2000 µm or less and more preferably 1500 µm or less. The average particle size can be measured by a laser diffraction/scattering particle size distribution analyzer (for example, particle size distribution analyzer LA-300 by HORIBA, Ltd.).

### [Hydraulic composition and production method thereof]

The present invention provides a hydraulic composition formulated with water, a hydraulic powder and the powdered dispersant for hydraulic compositions of the present invention.

The hydraulic composition of the present invention may be a hydraulic composition formulated with water, a hydraulic powder and the copolymer of the present invention in powder form.

The matters described in the powdered dispersant for hydraulic compositions of the present invention are appropriately applicable to the hydraulic composition of the present invention.

The hydraulic composition of the present invention formulated with water may be a hydraulic composition in slurry form.

The hydraulic powder used in the hydraulic composition of the present invention is a powder hardened by mixing with water, and examples thereof include, for example, ordinary Portland cement, high early strength Portland cement, ultra high early strength Portland cement, sulfate resistant Portland cement, low-heat Portland cement, white Portland cement and ecocements (for example, those in JIS R 5214 or the like). Among these, preferred are cements selected from high early strength Portland cement, ordinary Portland cement, sulfate resistant Portland cement and white Portland cement, and more preferred are high early strength Portland cement and ordinary Portland cement from the viewpoint of reducing the time required until the hydraulic composition reaches a required strength.

In addition, the hydraulic powder may include blast furnace slag, fly ash, silica fume, anhydrous gypsum or the like, and it may also include a non-hydraulic limestone fine powder or the like. Blast furnace cement, fly ash cement or silica fume cement prepared by mixing cement with blast furnace slag, fly ash, silica fume or the like may be used as the hydraulic powder.

The hydraulic composition of the present invention preferably contains an aggregate. Examples of the aggregate include fine aggregates, coarse aggregates or the like, and preferred fine aggregates are pit sand, land sand, river sand and crushed sand, and preferred coarse aggregates are pit gravel, land gravel, river gravel and crushed gravel. Depending on the intended use, a lightweight aggregate may be used. Note that the terms for aggregates are based on "KONKURITO SOURAN (Comprehensive Bibliography of Concrete)" (June 10, 1998, issued by Gijutsu Shoin).

In the hydraulic composition of the present invention, a dispersant for hydraulic powders other than the copolymer of the present invention such as a naphthalenesulfonate formaldehyde condensate or the like can be used.

The hydraulic composition may further contain components other than the copolymer of the present invention in a range that they do not affect the effects of the present invention. Examples thereof include, for example, an AE agent, a retarder, a foaming agent, a thickener, a blowing agent, a waterproofing agent, a fluidizing agent, a defoamer or the like.

In the hydraulic composition of the present invention, the copolymer of the present invention is mixed in an amount of preferably 0.005 parts by mass or more, more preferably 0.01 parts by mass or more and further preferably 0.05 parts by mass or more, and preferably 1.0 parts by mass or less, more preferably 0.7 parts by mass or less and further preferably 0.5 parts by mass or less relative to 100 parts by mass of the hydraulic powder from the viewpoint of imparting dispersibility.

In the hydraulic composition of the present invention, water/hydraulic powder ratio (W/P) is preferably 15 mass% or more, more preferably 20 mass% or more and further preferably 25 mass% or more, and preferably 80 mass% or less, more preferably 70 mass% or less and further preferably 60 mass% or less from the viewpoint of achieving both workability and strength.

Here, water/hydraulic powder ratio (W/P) is the mass percentage (mass%) of water to the hydraulic powder in the hydraulic composition, and is calculated by water/hydraulic powder × 100. Water/hydraulic powder ratio is calculated on the basis of the amount of a powder having the property of hardening through a hydration reaction.

The hydraulic composition of the present invention can be produced by mixing water, a hydraulic powder and the powdered dispersant for hydraulic compositions of the present invention. That is, the present invention provides a method for producing a hydraulic composition including, mixing water, a hydraulic powder and the powdered dispersant for hydraulic compositions of the present invention. The matters described in the powdered dispersant for hydraulic compositions and the hydraulic composition of the present invention are appropriately applicable to the method for producing a hydraulic composition of the present invention. For example, specific examples and preferred aspects of each component are the same as those in the powdered dispersant for hydraulic compositions and the hydraulic composition of the present invention. In addition, the content of each component in the powdered dispersant for hydraulic compositions and the hydraulic composition of the present invention may be replaced with the mixing amount and applied to the method for producing a hydraulic composition of the present invention.

### [Powdered hydraulic composition]

The present invention provides a powdered hydraulic composition formulated with a hydraulic powder and the powdered dispersant for hydraulic compositions of the present invention.

The powdered hydraulic composition of the present invention may be a powdered hydraulic composition formulated with a hydraulic powder and the copolymer of the present invention in powder form.

The matters described in the powdered dispersant for hydraulic compositions, the hydraulic composition and the production method thereof of the present invention are appropriately applicable to the powdered hydraulic composition of the present invention.

The powdered hydraulic composition of the present invention may be the so-called premix for hydraulic compositions. The powdered hydraulic composition of the present invention is a mixture for producing hydraulic compositions such as concrete, mortar or the like, and is obtained by mixing in advance the powdered dispersant for hydraulic compositions of the present invention and a hydraulic powder. Usually, the powdered hydraulic composition of the present invention is used by mixing with water. The powdered hydraulic composition of the present invention may be, for example, a mortar premix.

The powdered hydraulic composition of the present invention preferably contains the copolymer of the present invention in an amount falling within the range described in the hydraulic composition of the present invention relative to 100 parts by mass of the hydraulic powder. In addition, the powdered hydraulic composition of the present invention may contain fine aggregates or the like.

### [Method for producing powdered dispersant for hydraulic compositions]

The method for producing a powdered dispersant for hydraulic compositions of the present invention is a method for producing a powdered dispersant for hydraulic compositions including, obtaining a copolymer by polymerizing raw material monomers containing monomer 1 and monomer 2, wherein
monomer 2 is used such that a ratio of monomer 2 in the raw material monomers is 22 mass% or more,
monomers 1 and 2 are used such that a product of a value of n of monomer 1 and a value of mass% of the ratio is 420 or more and 2600 or less, and
the polymerization of the raw material monomers is carried out in a reaction medium containing water to obtain a reaction product containing water and the copolymer, and the reaction product is dried to obtain a powder containing the copolymer.

The matters described in the powdered dispersant for hydraulic compositions, the hydraulic composition and the production method thereof of the present invention are appropriately applicable to the method for producing a powdered dispersant for hydraulic compositions of the present invention. In the method for producing a powdered dispersant for hydraulic compositions of the present invention, monomers 1 and 2 are preferably used such that a ratio of the total of monomers 1 and 2 in the raw material monomers is 95 mass% or more.

In the method for producing a powdered dispersant for hydraulic compositions of the present invention, the polymerization of the raw material monomers is carried out in a reaction medium containing water. The polymerization may be carried out by a publicly-known method except that the ratios of monomers 1 and 2 fall within the predetermined ranges. The polymerization yields the reaction product containing water and the copolymer of the present invention. This reaction product is dried to obtain a powder containing the copolymer of the present invention.

In the method for producing a powdered dispersant for hydraulic compositions of the present invention, the powder can be obtained by heating and drying the reaction product. The heating and drying can be conducted by spray draying or thin film drying. The spray drying or the thin film drying can be conducted by a drum drying method, a spray drying method, a disk drying method or a belt drying method. The thin film drying can be conducted by a drum drying method or a disk drying method.

In the method for producing a powdered dispersant for hydraulic compositions of the present invention, the raw material monomers can be polymerized at a pH of 8 or less and preferably 7 or less, and preferably 4 or more from the viewpoint of the degradability and handleability of the monomers used.

In the method for producing a powdered dispersant for hydraulic compositions of the present invention, the reaction product can be dried after the copolymer in the reaction product is made to have a neutralization degree of 20 mol% or more, preferably 30 mol% or more and further preferably 35 mol% or more, and preferably 100 mol% or less, more preferably 80 mol% or less, further preferably 60 mol% or less and furthermore preferably 50 mol% or less from the viewpoint of storage stability. This neutralization degree is calculated from the use amount (number of moles) of a neutralizer relative to the number of moles of acids (acid type compounds) contained in monomers 1, 2 and 3. The neutralization of the copolymer may be carried out by dropwise or lump-sum addition of an alkali agent such as an aqueous solution of sodium hydroxide to the reaction product. The neutralization is preferably carried out when the reaction product is cooled after monomers 1 and 2 or monomers 1, 2 and 3 in some cases are polymerized and thereafter aged as necessary. The higher the neutralization degree is, the easier the powderization tends to be.

In the method for producing a powdered dispersant for hydraulic compositions of the present invention, it is preferred from the viewpoint of ease of powderization that monomer 2 be methacrylic acid, the ratio of monomer 2a in monomer 2 be 100 mol%, n in monomer 1 be 9 or more and 23 or less, the product of a value of n of monomer 1 and a mass percentage of the ratio of monomer 2 in the raw material monomers be 500 or more and 720 or less, the copolymer have a weight average molecular weight of 30000 or more and 70000 or less, and drying be conducted by spray drying.

In the method for producing a powdered dispersant for hydraulic compositions of the present invention, it is preferred from the viewpoint of ease of powderization that monomer 2 be methacrylic acid, the ratio of monomer 2a in monomer 2 be 100 mol%, n in monomer 1 be 5 or more and 15 or less, the product of a value of n of monomer 1 and a mass percentage of the ratio of monomer 2 in the raw material monomers be 400 or more and 700 or less, the copolymer have a weight average molecular weight of 30000 or more and 90000 or less, and drying be conducted by spray drying.

In the method for producing a powdered dispersant for hydraulic compositions of the present invention, it is preferred from the viewpoint of ease of powderization that monomer 2 be methacrylic acid, the ratio of monomer 2a in monomer 2 be 100 mol%, n in monomer 1 be 16 or more and 30 or less, the product of a value of n of monomer 1 and a mass percentage of the ratio of monomer 2 in the raw material monomers be 600 or more and 1500 or less, the copolymer have a weight average molecular weight of 30000 or more and 45000 or less, and drying be conducted by spray drying.

In the method for producing a powdered dispersant for hydraulic compositions of the present invention, drying makes the reaction product extremely easily collapse and easy to powderize without applying large external force.

### Examples

### <Monomer 1>

MEPEG (9): methoxypolyethylene glycol (9) monomethacrylate (the numeral shown in parenthesis is an average number of added moles of EO and corresponds to n in the general formula (1), the same applies to the following)
MEPEG (23): methoxypolyethylene glycol (23) monomethacrylate

### <Monomer 1' (shown in the column of monomer 1 in the table for convenience)>

MEPEG (120): methoxypolyethylene glycol (120) monomethacrylate

### <Monomer 2>

MAA: methacrylic acid
MA: methyl acrylate
HEA: 2-hydroxyethyl acrylate
PADMER: phosphoric acid mono(di) (2-hydroxyethyl) methacrylate ester

### <Production of copolymer>

A copolymer of example 1 was produced in the following manner.

A glass reaction vessel with a stirrer was filled with 202.15 g of water and nitrogen purging was carried out with stirring, and the temperature was increased to 80°C in a nitrogen atmosphere. Both (i) 95.37 g of monomer 2 (methacrylic acid) and 8.70 g of 3-mercaptopropionic acid mixed and dissolved in 107.48 g of an aqueous solution of monomer 1 (MEPEG (23)) (active ingredient 65.10 mass%, water 34.9 mass%) and (ii) 6.68 g of ammonium persulfate dissolved in 15.59 g of water were added dropwise in the vessel for 1.5 hours each. Next, 5.34 g of ammonium persulfate dissolved in 12.47 g of water was added dropwise for 30 minutes, and thereafter, the mixture was aged at the same temperature (80°C) for 1 hour. After the end of aging, neutralization was carried out with 37.1 g of a 48% sodium hydroxide aqueous solution, thereby obtaining a reaction product containing a copolymer with a weight average molecular weight of 36,000 and water.

The other copolymers in the table were produced in the same manner as above except that the types and the use amounts of the monomers were changed.

### <Evaluation of ease of dry powderization>

The above-prepared reaction product containing the copolymer and water and having a concentration and an amount adjusted such that it would have a film thickness after drying of about 1 mm, in an aluminum cup, was placed in a flat container, and dried and solidified in a constant-temperature drying oven at 105°C for 10 hours. A test piece of 40 mm×15 mm was prepared from the dried thin film and held between fingers at a location about 1 mm from one end in the longitudinal direction, and a bending force was applied by hand from the other end. This test was conducted at an ambient temperature of 20°C, and ease of formation of the sheet of the dried and solidified product from the reaction product and ease of powderization were checked by observing behavior at that time, and evaluated as ease of dry powderization on the basis of the following criteria. The results are shown in Table 1.
Good ... A sheet can be formed, and bending the obtained sheet at 20° causes a crack with a length of 1 cm or longer.
Poor ... A sheet can be formed, but the obtained sheet is elastic, i.e., even bending the obtained sheet at 20° causes no cracks with a length of 1 cm or longer, or the dried and solidified product remains liquid and a sheet cannot be formed.

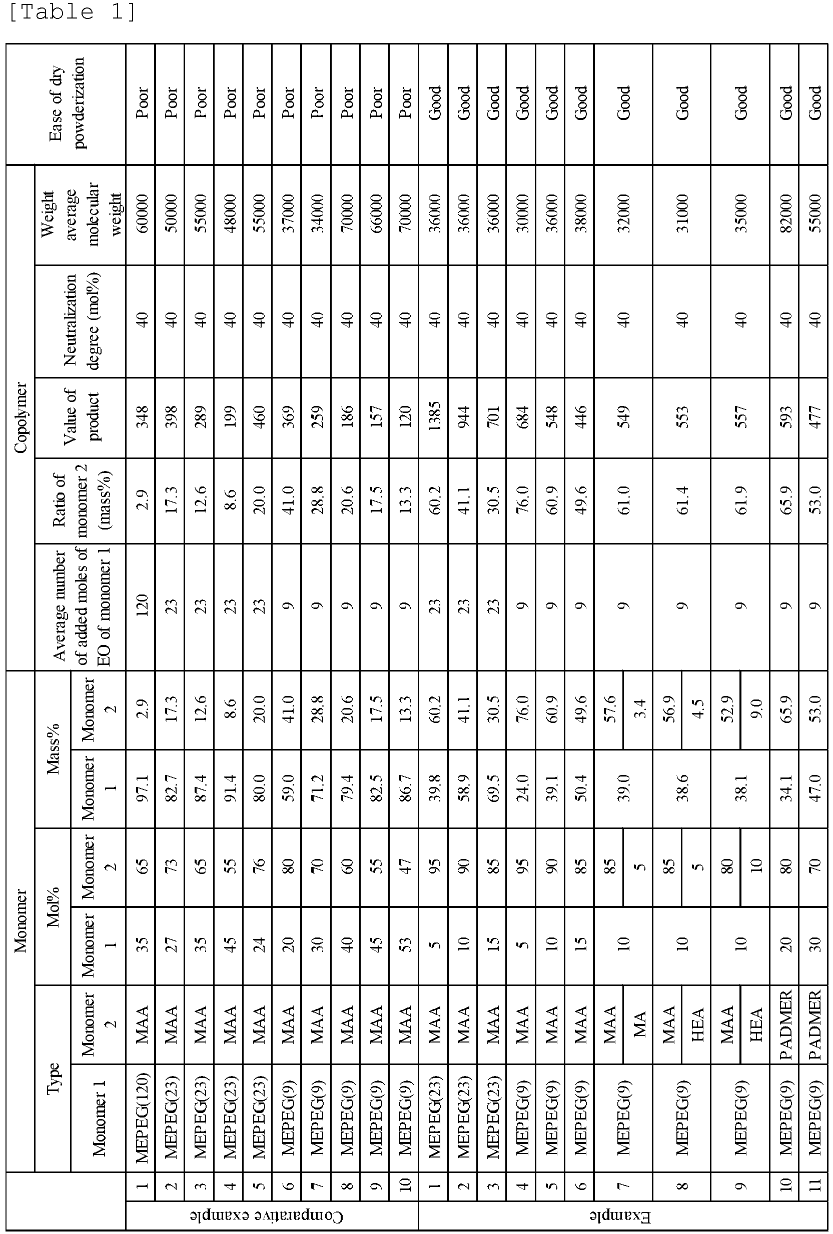

In the table, ratio of monomer 2 represents the ratio of monomer 2 in the raw material monomers (mass%), and value of product represents the product of a value of the average number of added moles n of EO of monomer 1 and a value of mass% of the ratio of monomer 2.

In the examples, only heating and drying the reaction products containing the copolymers could form highly crackable sheets easily cracked under slight stress. This result means that the sheets prepared from the copolymers of the examples can be quite easily powderized, for example, by mechanical grinding. In addition, the copolymers of the examples, which are composed of monomers 1 and 2, efficiently adsorb to a hydraulic powder and are also excellent in dispersibility.

## Claims

1. A powdered dispersant for hydraulic compositions comprising a copolymer obtained by polymerizing raw material monomers comprising a monomer 1 represented by the general formula (1) and at least one monomer 2 selected from a monomer represented by the general formula (2a), a monomer represented by the general formula (2b), a monomer represented by the general formula (2c) and a monomer represented by the general formula (2d), wherein
a ratio of the monomer 2 in the raw material monomers is 22 mass% or more, and
a product of a value of n of the monomer 1 and a value of mass% of the ratio is 420 or more and 2600 or less, 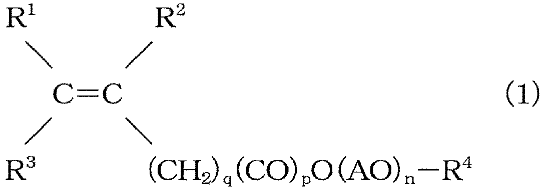 wherein R¹ and R³ are the same or different and individually represent a hydrogen atom or a methyl group; R² represents an alkyl group with 1 or more and 3 or less carbons; R⁴ represents a hydrogen atom or a methyl group; q is a number of 0 or more and 2 or less; p is 0 or 1; and n is a number of 5 or more and 30 or less, 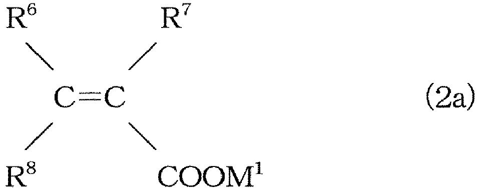 wherein R⁶, R⁷ and R⁸ are the same or different and individually represent a hydrogen atom or a methyl group; and M¹ represents a hydrogen atom, an alkali metal or an alkaline-earth metal (1/2 atom), 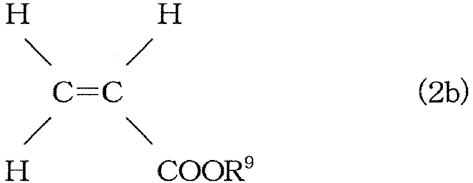 wherein R⁹ represents a hydrocarbon group with 1 or more and 4 or less carbons, optionally containing a hetero atom, 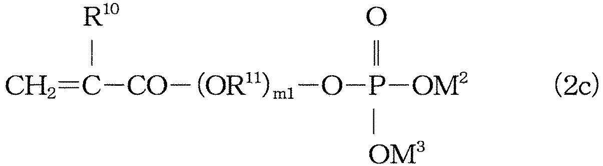 wherein R¹⁰ represents a hydrogen atom or a methyl group; R¹¹ represents an alkylene group with 2 or more and 12 or less carbons; m1 is a number of 1 or more and 30 or less; and M² and M³ are the same or different and individually represent a hydrogen atom, an alkali metal or an alkaline-earth metal (1/2 atom), and 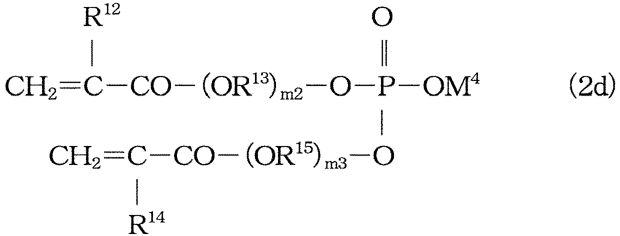 wherein R¹² and R¹⁴ are the same or different and individually represent a hydrogen atom or a methyl group; R¹³ and R¹⁵ are the same or different and individually represent an alkylene group with 2 or more and 12 or less carbons; m2 and m3 are the same or different and individually represent a number of 1 or more and 30 or less; and M⁴ represents a hydrogen atom, an alkali metal or an alkaline-earth metal (1/2 atom).

2. The powdered dispersant for hydraulic compositions according to claim 1, wherein n in the formula (1) is a number of 8 or more and 25 or less.

3. The powdered dispersant for hydraulic compositions according to claim 1 or 2, wherein the copolymer has a weight average molecular weight (Mw) of 20,000 or more and 100,000 or less.

4. A hydraulic composition formulated with water, a hydraulic powder and the powdered dispersant for hydraulic compositions according to any one of claims 1 to 3.

5. A method for producing a hydraulic composition comprising, mixing water, a hydraulic powder and the powdered dispersant for hydraulic compositions according to any one of claims 1 to 3.

6. A powdered hydraulic composition formulated with a hydraulic powder and the powdered dispersant for hydraulic compositions according to any one of claims 1 to 3.

7. A method for producing a powdered dispersant for hydraulic compositions comprising, obtaining a copolymer by polymerizing raw material monomers comprising a monomer 1 represented by the general formula (1) and at least one monomer 2 selected from a monomer represented by the general formula (2a), a monomer represented by the general formula (2b), a monomer represented by the general formula (2c) and a monomer represented by the general formula (2d), wherein
the monomer 2 is used such that a ratio of the monomer 2 in the raw material monomers is 22 mass% or more,
the monomer 1 and the monomer 2 are used such that a product of a value of n of the monomer 1 and a value of mass% of the ratio is 420 or more and 2600 or less, and
the polymerization of the raw material monomers is carried out in a reaction medium containing water to obtain a reaction product containing water and the copolymer, and the reaction product is dried to obtain a powder containing the copolymer, 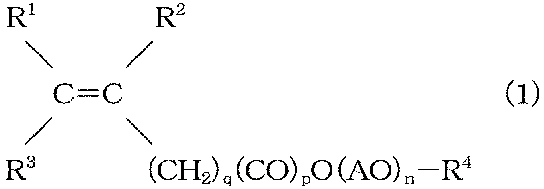 wherein R¹ and R³ are the same or different and individually represent a hydrogen atom or a methyl group; R² represents an alkyl group with 1 or more and 3 or less carbons; R⁴ represents a hydrogen atom or a methyl group; q is a number of 0 or more and 2 or less; p is 0 or 1; and n is a number of 5 or more and 30 or less, 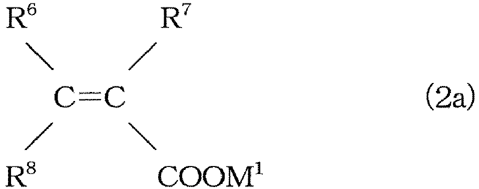 wherein R⁶, R⁷ and R⁸ are the same or different and individually represent a hydrogen atom or a methyl group; and M¹ represents a hydrogen atom, an alkali metal or an alkaline-earth metal (1/2 atom), 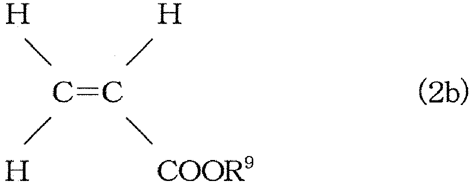 wherein R⁹ represents a hydrocarbon group with 1 or more and 4 or less carbons, optionally containing a hetero atom, 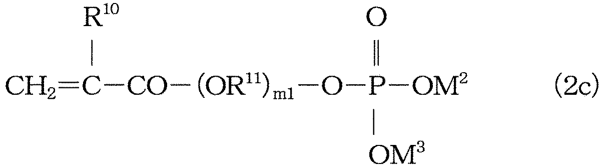 wherein R¹⁰ represents a hydrogen atom or a methyl group; R¹¹ represents an alkylene group with 2 or more and 12 or less carbons; m1 is a number of 1 or more and 30 or less; and M² and M³ are the same or different and individually represent a hydrogen atom, an alkali metal or an alkaline-earth metal (1/2 atom), and 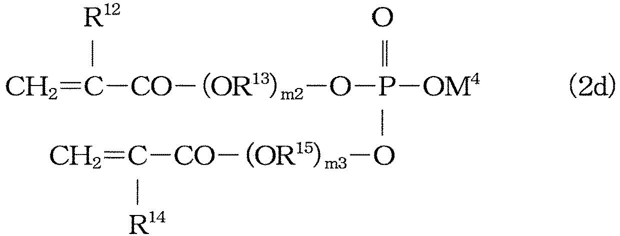 wherein R¹² and R¹⁴ are the same or different and individually represent a hydrogen atom or a methyl group; R¹³ and R¹⁵ are the same or different and individually represent an alkylene group with 2 or more and 12 or less carbons; m2 and m3 are the same or different and individually represent a number of 1 or more and 30 or less; and M⁴ represents a hydrogen atom, an alkali metal or an alkaline-earth metal (1/2 atom).

8. The method for producing a powdered dispersant for hydraulic compositions according to claim 7, wherein the powder is obtained by heating and drying the reaction product.

9. The method for producing a powdered dispersant for hydraulic compositions according to claim 8, wherein the heating and drying is conducted by spray drying or thin film drying.

10. The method for producing a powdered dispersant for hydraulic compositions according to claim 9, wherein the spray drying or the thin film drying is conducted by a drum drying method, a spray drying method, a disk drying method or a belt drying method.

11. The method for producing a powdered dispersant for hydraulic compositions according to any one of claims 7 to 10, wherein the raw material monomers are polymerized at a pH of 8 or less.

12. The method for producing a powdered dispersant for hydraulic compositions according to any one of claims 7 to 11, wherein the reaction product is dried after the copolymer in the reaction product is made to have a neutralization degree of 20 mol% or more.
